# EUROPEAN PATENT SPECIFICATION

(11) **EP 4 507 108 B1**
(45) Date of publication and mention of the grant of the patent: **29.04.2026**
(21) Application number: 23887621.3
(22) Date of filing: 06.09.2023
(51) Int. Cl.: H01M 50/50, H01M 50/519, H01M 50/572, H01M 10/42, H01M 50/557, H01M 50/574

(54) **BATTERY AND ELECTRONIC DEVICE**
BATTERIE UND ELEKTRONISCHE VORRICHTUNG
BATTERIE ET DISPOSITIF ÉLECTRONIQUE

(30) Priority: 07.11.2022 CN 202222954173 U
(43) Date of publication of application: 12.02.2025
(73) Proprietor: Zhuhai Cosmx Power Co., Ltd., Zhuhai, Guangdong 519180 (CN)
(72) Inventor: HUANG, Zengke, Zhuhai, Guangdong 519180 (CN); LUO, Zihao, Zhuhai, Guangdong 519180 (CN)
(74) Representative: Elzaburu S.L.P.
(86) International application number: PCT/CN2023/117227
(87) International publication number: WO 2024/098927

(56) References cited:
- EP-A1- 4 020 654
- CN-A- 111 403 675
- CN-A- 112 133 876
- CN-A- 113 851 793
- CN-U- 218 513 631
- US-A1- 2022 231 324

## Description

### TECHNICAL FIELD

The present application relates to the field of batteries, and in particular to a battery and an electronic device.

### BACKGROUND

With the development of science and technology, electrochemical devices represented by batteries have been widely used. For example, lithium-ion batteries have the advantages of large capacity, small bulk and light weight, and are green and environmentally friendly. They have been widely used in industries such as digital electronic products and electric vehicles.

In the related art, depending on the material of the lithium-ion batteries, overcharging, over-discharging, over-current, short-circuit, and charging and discharging at an ultra-high temperature are not allowed for them. Therefore, a battery protection board is generally provided on a lithium-ion battery for monitoring and protection. As fast charging technology becomes more and more popular, overcurrent-protection-related requirements for batteries and protection boards are getting higher and higher. In order to achieve a desirable overcurrent protection effect, the size of the protection board is set to be relatively large accordingly.

EP4020654A1 discloses a battery module, comprising a battery cell, wherein the battery cell comprises a battery cell body, a first tab, a second tab, and a third tab, wherein the first tab, the second tab, and the third tab are separately electrically connected to the battery cell body, the first tab and the third tab have a first polarity, and the second tab has a second polarity; working together, the second tab and the first tab are capable of inputting a voltage and a current to the battery cell body or capable of outputting a voltage and a current from the battery cell body; working together, the second tab and the third tab are capable of inputting a voltage and a current to the battery cell body or capable of outputting a voltage and a current from the battery cell body; and the first polarity is a positive polarity, and the second polarity is a negative polarity; or the first polarity is a negative polarity, and the second polarity is a positive polarity.

CN115275365A discloses a battery module supporting high-power fast charging. The battery module comprises a battery cell, and the battery cell comprises a battery cell body, a first tab, a second tab and a third tab. And the first tab, the second tab and the third tab are electrically connected with the battery cell body respectively. The first tab and the third tab have a first polarity, and the second tab has a second polarity. And the second tab and the first tab are matched to input voltage and current to the battery cell body or output voltage and current from the battery cell body. And the second tab and the third tab are matched to input voltage and current to the battery cell body or output voltage and current from the battery cell body. The first polarity is different from the second polarity.

However, the capacity of the battery in the above solution is relatively small, which affects the battery life of the electronic device.

### SUMMARY

In order to solve at least one of the problems mentioned in the background, the present application provides a battery and an electronic device, aiming to solve the technical problem in the related art that the battery life of the electronic device would be affected due to relatively small battery capacity. The present invention is as defined in the appended claim set.

In order to achieve the above-mentioned object, in a first aspect, the present application provides a battery, including a battery cell, a connecting member and a protection board assembly, where the battery cell includes a battery cell body and two tabs connected to the battery cell body, the connecting member includes two connecting tabs and a connecting portion connecting the two connecting tabs, where one of the connecting tabs is connected to and is electrically conducted with one of the tabs to form a composite tab;
the composite tab and the other one of the tabs are both connected to the protection board assembly to form a first loop; the other one of the connecting tabs and the other one of the tabs are both connected to the protection board assembly to form a second loop.

In the above-described battery, in a feasible implementation, the connecting portion includes a connecting portion body and a boss which are integrally formed, the connecting portion body is connected to the two connecting tabs, and the boss is connected to the battery cell body.

In the above-described battery, in a feasible implementation, the boss is located at a position on the connecting portion body corresponding to any one of the two connecting tabs, and is located on a side of the connecting portion body close to the battery cell body.

In the above-described battery, in a feasible implementation, the boss is located on the connecting portion body between the two connecting tabs;
the boss is located on a side of the connecting portion body close to the battery cell body;
or, the boss is located on a side of the connecting portion body away from the battery cell body.

In the above-described battery, in a feasible implementation, the one of the connecting tabs is stacked and connected with the one of the tabs to form the composite tab.

In the above-described battery, in a feasible implementation, the protection board assembly includes a circuit board, a first conductive member, a second conductive member and a third conductive member, the first conductive member is connected to the composite tab, the second conductive member is connected to the other one of the tabs, and the third conductive member is connected to the other one of the connecting tabs.

The circuit board, the first conductive member, the second conductive member, the composite tab and the other one of the tabs form the first loop; the circuit board, the second conductive member, the third conductive member, the other one of the tabs, and the other one of the connecting tabs form the second loop.

In the above-described battery, in a feasible implementation, an insulating layer is further included, where the insulating layer covers both sides of the connecting portion, and along an extending direction of the connecting portion, an edge of the insulating layer protrudes beyond an edge of the connecting portion.

In the above-described battery, in a feasible implementation, the edge of the insulating layer protrudes beyond the edge of the connecting portion by a size of 0.2 mm to 1.0 mm.

In the above-described battery, in a feasible implementation, an extending direction of the connecting tab and an extending direction of the connecting portion body intersect with each other, and a first notch is provided at a corner of a connection position between the connecting tab and the connecting portion body;
and/or, at least one tab is located between the two connecting tabs, an orthographic projection of the at least one tab on a plane where the connecting portion body is located overlaps with at least part of the connecting portion body to form an overlapping area, and a second notch is provided on the connecting portion body in the overlapping area;
and/or, a third notch is provided at at least one corner of a connection position between the boss and the connecting portion body.

In the above-described battery, in a feasible implementation, the connecting member is a flexible connecting member, and a portion of the connecting member is bent and connected to the battery cell body.

In the above-described battery, in a feasible implementation, the portion of the connecting member is bent and enters a deep pit surface of a top sealing of the battery cell body;
or, the portion of the connecting member is bent and enters into a shallow pit surface of a top sealing of the battery cell body.

In the above-described battery, in a feasible implementation, the connecting member is fixedly connected to the top sealing of the battery cell body by double-sided tape or adhesive tape or glue.

In a second aspect, the present application also provides an electronic device, including a housing and the battery, where the battery is located inside the housing.

According to the battery and the electronic device provided in the present application, a connecting member having two connecting tabs is provided, and one of the connecting tabs is connected to one of the tabs to form a composite tab, so that the composite tab can be connected to the battery cell body through a connecting portion; the composite tab and the other one of the tabs are connected to the protection board assembly to form a first loop, and the other one of the connecting tabs and the other one of the tabs are connected to the protection board assembly to form a second loop, and the first loop and the second loop can form two parallel current loops, that is, the protection board assembly and the battery cell have two parallel loops formed, hence the magnitude of the current in a single loop of the protection board assembly can be reduced, and the size of the protection board assembly can be decreased, and the accommodating size of the battery can be increased, thereby increasing the capacity of the battery cell, that is, increasing the battery capacity.

The structure of the present application and its other application objects and beneficial effects will be more clearly understood through the description of the preferred embodiments in conjunction with the accompanying drawings.

### BRIEF DESCRIPTION OF DRAWINGS

In order to more clearly illustrate the technical solutions provided in embodiments of the present application or the prior art, the drawings used for describing the embodiments or the prior art will be briefly introduced below. Obviously, the drawings described below are intended for some embodiments of the present application. For those ordinarily skilled in the art, other drawings can be obtained based on these drawings without paying any creative effort.
FIG. 1 is a schematic structural diagram of an electronic device provided in an embodiment of the present application.
FIG. 2 is a schematic structural diagram of a battery cell of a battery provided in an embodiment of the present application.
FIG. 3 is a first schematic structural diagram of a connecting member of a battery provided in an embodiment of the present application.
FIG. 4 is a first schematic structural diagram of a battery cell and a connecting member of a battery provided in an embodiment of the present application.
FIG. 5 is a first schematic structural diagram of a battery provided in an embodiment of the present application.
FIG. 6 is a second schematic structural diagram of a connecting member of a battery provided in an embodiment of the present application.
FIG. 7 is a second schematic structural diagram of a battery cell and a connecting member of a battery provided in an embodiment of the present application.
FIG. 8 is a second schematic structural diagram of a battery provided in an embodiment of the present application.
FIG. 9 is a third schematic structural diagram of a connecting member of a battery provided in an embodiment of the present application.
FIG. 10 is a third schematic structural diagram of a battery cell and a connecting member of a battery provided in an embodiment of the present application.
FIG. 11 is a third schematic structural diagram of a battery provided in an embodiment of the present application.
FIG. 12 is a fourth schematic structural diagram of a connecting member of a battery provided in an embodiment of the present application.
FIG. 13 is a fourth schematic structural diagram of a battery cell and a connecting member of a battery provided in an embodiment of the present application.
FIG. 14 is a fourth schematic structural diagram of a battery provided in an embodiment of the present application.
FIG. 15 is a fifth schematic structural diagram of a connecting member of a battery provided in an embodiment of the present application.
FIG. 16 is a fifth schematic structural diagram of a battery cell and a connecting member of a battery provided in an embodiment of the present application.
FIG. 17 is a fifth schematic structural diagram of a battery provided in an embodiment of the present application.

### Description of reference numerals:

100-electronic device; 110-housing; 120-electronic element; 200-battery; 210-battery cell; 211-battery cell body; 212-tab; 220-protection board assembly; 230-connecting member; 231-connecting tab; 232-connecting portion; 240-composite tab; 2321-connecting portion body; 2322-boss; 221-circuit board; 222-first conductive member; 223-second conductive member; 224-third conductive member; 225-first external connecting member; 226-second external connecting member; 250-insulating layer; 233-first notch; 234-second notch; 235-third notch.

The above-mentioned drawings have shown specific embodiments of the present application, which will be described in more detail below. These drawings and textual descriptions are not intended to limit the scope of the conception of the present application in any way, but rather to illustrate the concept of the present application to those skilled in the art with reference to specific embodiments.

### DESCRIPTION OF EMBODIMENTS

In the related art, the protection board assembly is generally used for connection with the tabs of the battery cell and adaption with the electronic device, to supply power to the electronic device. The protection board assembly can protect the battery cell. The size of the protection board assembly is positively correlated with the magnitude of the current flowing therethrough. That is, the larger the current flowing through the protection board assembly, the thicker the protection board assembly; and correspondingly, the greater the proportion of the battery occupied by the protection board assembly, the smaller the proportion occupied by the battery cell, that is, the capacity of the battery cell is smaller, affecting the battery life of the electronic device.

Based on the above-mentioned technical problems, the present application provides a battery and an electronic device. The battery includes a battery cell, a connecting member and a protection board assembly, where the battery cell includes a battery cell body and two tabs connected to the battery cell body, the connecting member includes two connecting tabs and a connecting portion connecting the two connecting tabs, and one of the connecting tabs is connected to and is electrically conducted with one of the tabs to form a composite tab; the composite tab and the other one of the tabs are both connected to the protection board assembly to form a first loop; the other one of the connecting tabs and the other one of the tabs are both connected to the protection board assembly to form a second loop. By providing a connecting member having two connecting tabs, one of the connecting tabs is connected to one of the tabs to form a composite tab, so that the composite tab can be connected to the battery cell body through the connecting portion; the composite tab and the other one of the tabs are connected to the protection board assembly to form a first loop, and the other one of the connecting tabs and the other one of the tabs are connected to the protection board assembly to form a second loop, and the first loop and the second loop can form two parallel current loops, that is, the protection board assembly and the battery cell have two parallel loops formed, hence the magnitude of the current in a single loop of the protection board assembly can be reduced, the size of the protection board assembly can be decreased, and the accommodating size of the battery can be increased, thereby increasing the capacity of the battery cell, that is, increasing the battery capacity.

In order to make the object, technical solutions and advantages of the present application clearer, the technical solutions in embodiments of the present application will be described in more detail below with reference to the drawings in the preferred embodiments of the present application. Throughout the drawings, the same or similar reference numerals represent the same or similar components or components having the same or similar functions. The described embodiments are only part of the embodiments of the present application, rather than all the embodiments. The embodiments described below with reference to the accompanying drawings are exemplary and are intended to be used to explain the present application, but should not be construed as limiting the present application. Based on the embodiments in the present application, all other embodiments obtained by those ordinarily skilled in the art without any creative effort shall fall within the scope of protection of the present application. The embodiments of the present application are described in detail below with reference to the accompanying drawings.

In the description of the embodiments of the present application, it should be understood that, unless otherwise clearly specified and limited, the terms "install", "connect with" and "connect to" should be understood in a broad sense. For example, it can be a fixed connection or an indirect connection through an intermediate medium, it can be an internal connection between two elements or an interaction relationship between two elements. For those skilled in the art, the specific meanings of the above terms in the present application can be understood according to specific circumstances.

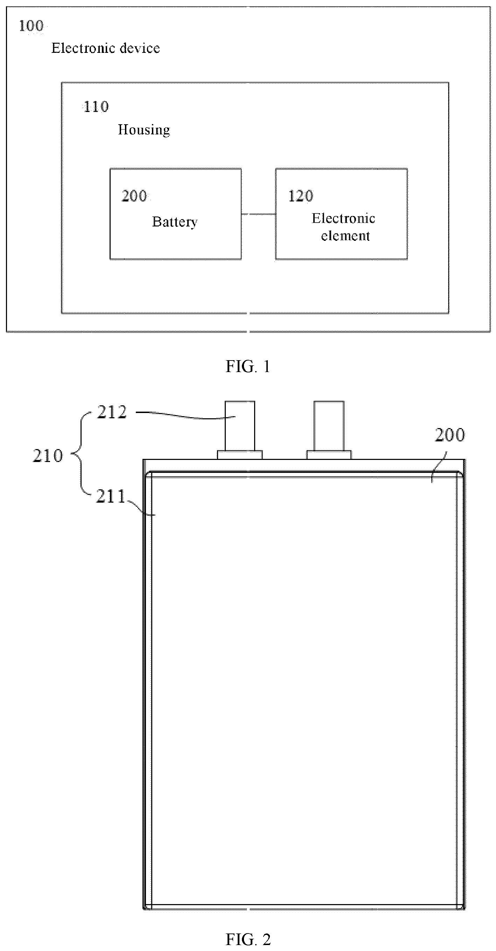

FIG. 1 is a schematic structural diagram of an electronic device provided in an embodiment of the present application.

In a first aspect, referring to FIG. 1, an embodiment of the present application provides an electronic device 100. The electronic device 100 may be a portable electronic device 100 such as a mobile phone, a tablet computer, a laptop computer, or a personal digital assistant, or may be any device having a battery 200 such as an electric vehicle power supply, a motor vehicle power supply, or a power bank. The embodiment of the present application does not limit the specific form of the electronic device 100, nor is it limited to the above examples.

The following description will be given by taking the electronic device 100 being a mobile phone as an example.

It is understandable that the electronic device 100 may include a housing 110 and electronic elements 120 located in the housing 110, where the electronic elements 120 may be a display screen, a processor, a memory, a camera, a microphone, a speaker, and the like. It is understandable that other electronic elements 120 may be provided in the electronic device 100, which will not be described in detail in the embodiment of the present application.

It should be noted that when the above-mentioned electronic elements 120 are working, for example, the display screen are displaying videos, images, or text information, or the processor is processing and executing the received operation signals, or the speaker is playing audio signals, etc., electrical energy would be consumed. In other words, the electrical energy is consumed when the user uses the above-mentioned electronic device 100.

As shown in FIG. 1, the electronic device 100 further includes a battery 200. The battery 200 may be disposed in the housing 110 to provide the electronic elements 120 in the housing 110 with the electrical energy required for operation.

It can be understood that the battery 200 can be connected to the electronic device 100 in a detachable manner. For example, a back cover is provided on either side of the housing 110 of the electronic device 100, the back cover is detachably connected to the housing 110, and the battery 200 is installed to the electronic device 100 through the back cover; definitely, in order to improve the portability of the electronic device 100, the battery 200 can also be directly built into the housing of the electronic device 100. That is to say, when producing the electronic device 100, the battery 200 can be directly packaged inside the housing 110 of the electronic device 100, which can improve the portability of the electronic device 100 on the one hand, and improve the stability of the electrical connection between the battery 200 and the electronic device 100 on the other hand. The embodiment of the present application does not limit the connection mode and position of the battery 200 in the electronic device 100, nor is it limited to the above examples.

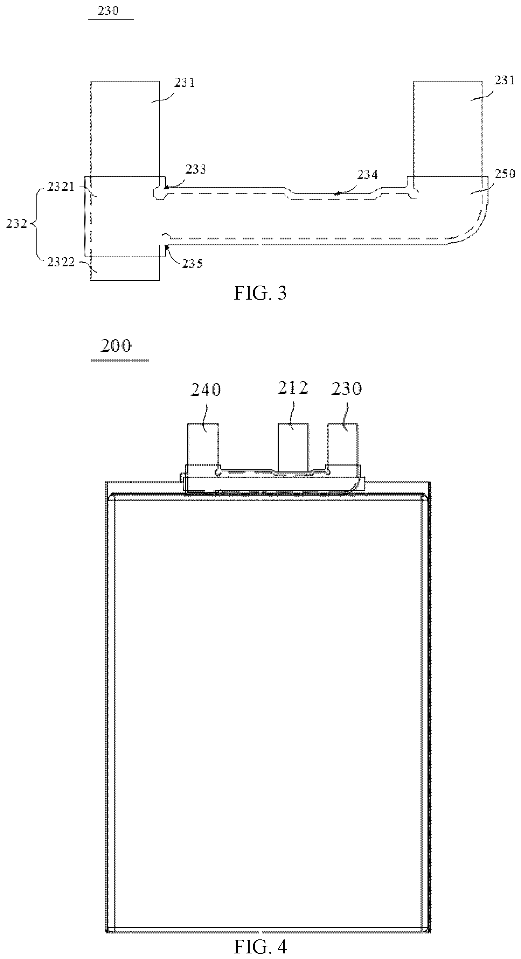

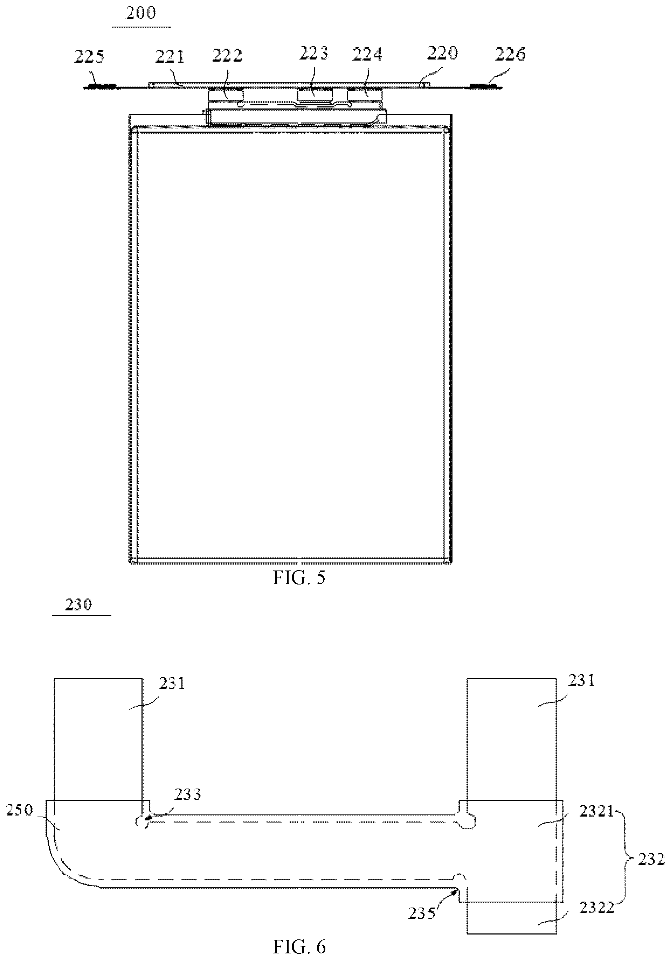

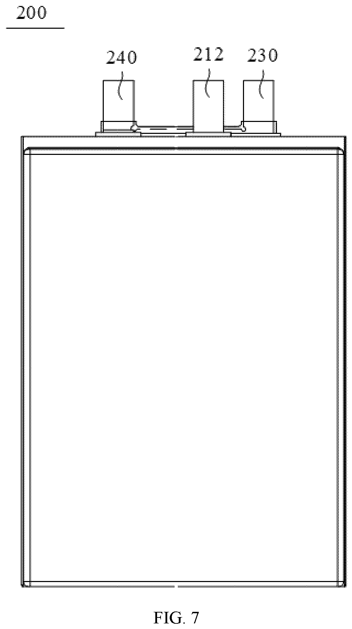

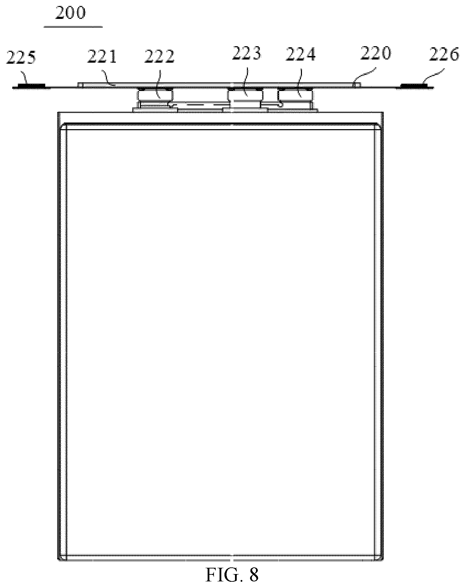

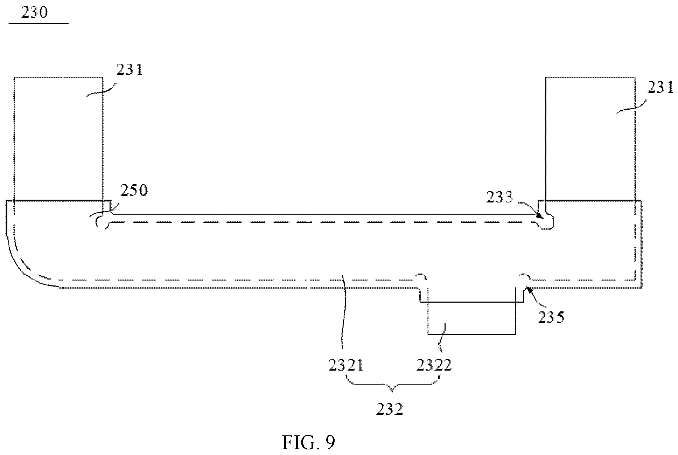

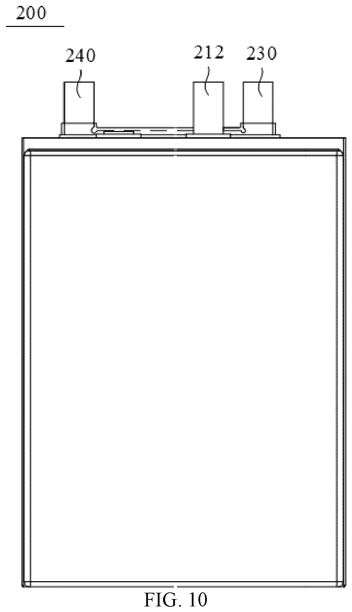

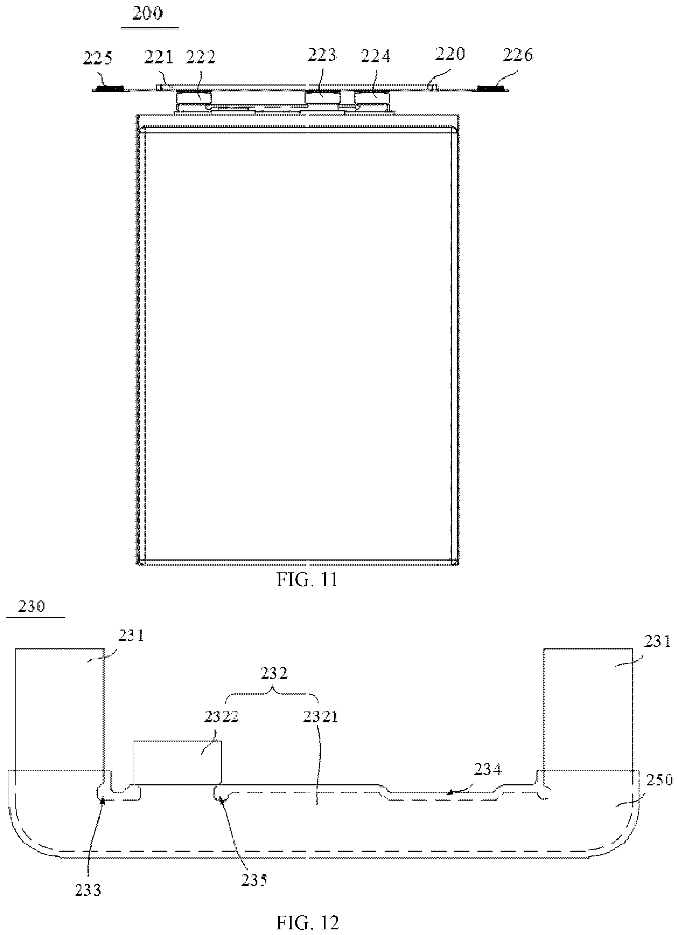

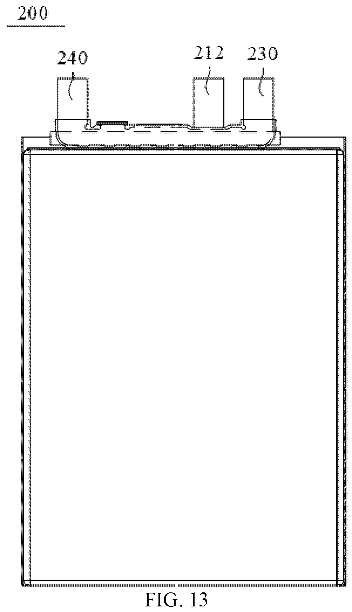

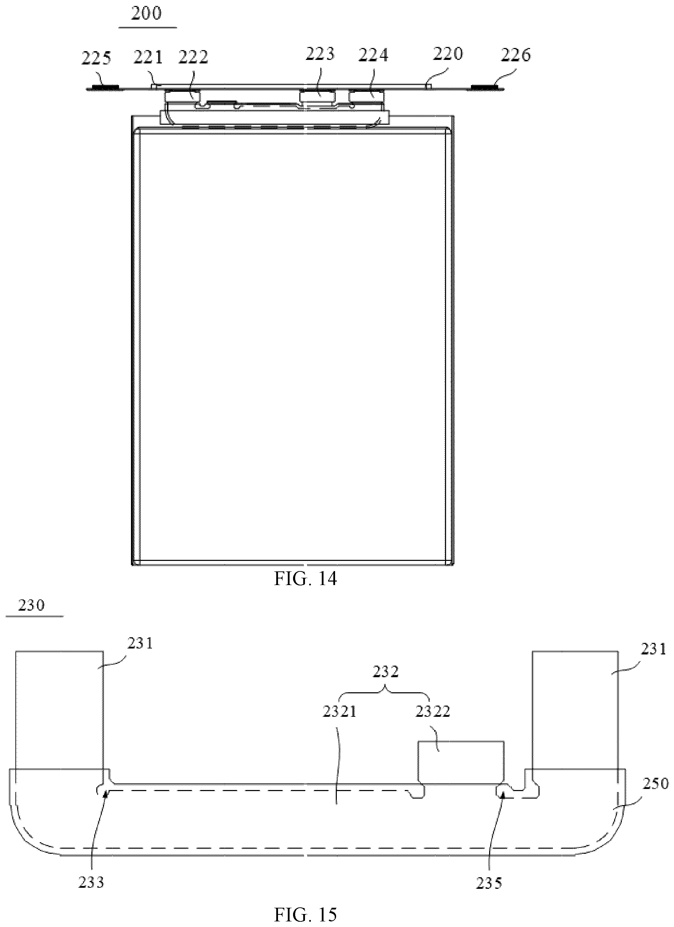

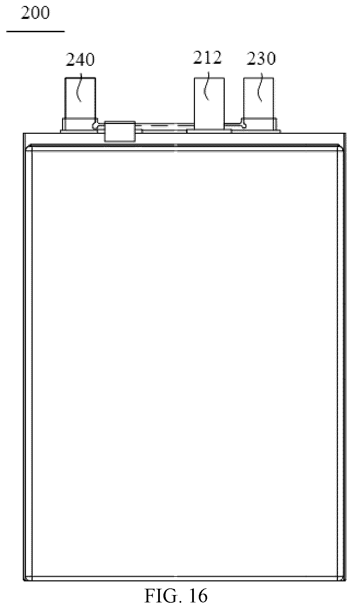

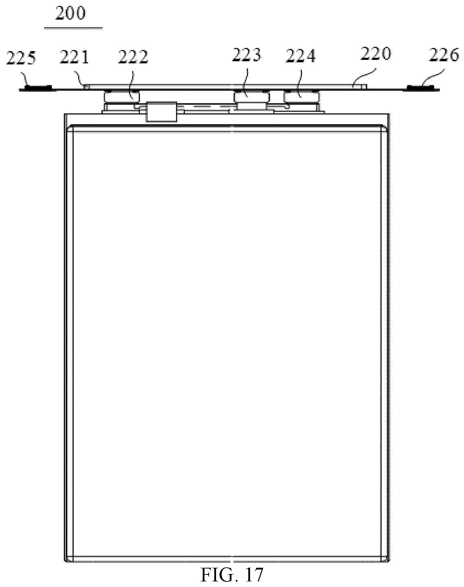

FIG. 2 is a schematic structural diagram of a battery cell of a battery provided in an embodiment of the present application. FIG. 3 is a first schematic structural diagram of a connecting member of a battery provided in an embodiment of the present application. FIG. 4 is a first schematic structural diagram of a battery cell and a connecting member of a battery provided in an embodiment of the present application. FIG. 5 is a first schematic structural diagram of a battery provided in an embodiment of the present application. FIG. 6 is a second schematic structural diagram of a connecting member of a battery provided in an embodiment of the present application. FIG. 7 is a second schematic structural diagram of a battery cell and a connecting member of a battery provided in an embodiment of the present application. FIG. 8 is a second schematic structural diagram of a battery provided in an embodiment of the present application. FIG. 9 is a third schematic structural diagram of a connecting member of a battery provided in an embodiment of the present application. FIG. 10 is a third schematic structural diagram of a battery cell and a connecting member of a battery provided in an embodiment of the present application. FIG. 11 is a third schematic structural diagram of a battery provided in an embodiment of the present application. FIG. 12 is a fourth schematic structural diagram of a connecting member of a battery provided in an embodiment of the present application. FIG. 13 a fourth schematic structural diagram of a battery cell and a connecting member of a battery provided in an embodiment of the present application. FIG. 14 a fourth schematic structural diagram of a battery provided in an embodiment of the present application. FIG. 15 a fifth schematic structural diagram of a connecting member of a battery provided in an embodiment of the present application. FIG. 16 is a fifth schematic structural diagram of a battery cell and a connecting member of a battery provided in an embodiment of the present application. FIG. 17 a fifth schematic structural diagram of a battery provided in an embodiment of the present application.

In a second aspect, referring to FIG. 2 to FIG. 17, an embodiment of the present application provides a battery 200, including a battery cell 210. The battery cell 210 may be a battery cell with an aluminum housing, a soft-packaged battery cell, or a cylindrical battery cell. In some specific examples, for example, when the electronic device 100 is a mobile phone, the battery cell may be a battery cell with an aluminum housing, and when the electronic device 100 is a laptop computer, the battery cell 210 may be a cylindrical battery cell. The embodiment of the present application does not limit the specific type of the battery cell 210, nor is it limited to the above examples.

Specifically, as shown in FIG. 2, the battery cell 210 includes a battery cell body 211 and two tabs 212 connected to the battery cell body 211. The two tabs 212 can be both disposed at one end of the battery cell body 211 to facilitate connection of the two tabs 212.

It can be understood that the polarities of the two tabs 212 are opposite. For example, one of the tabs 212 is a positive tab 212 and the other one of the tabs 212 is a negative tab 212. The embodiment of the present application does not limit the specific polarities of the two tabs 212, nor is it limited to the above examples.

Specifically, as shown in FIG. 5 to FIG. 17, the battery 200 also includes a protection board assembly 220, which can be connected to the tabs 212 and to the electronic element 120 of the electronic device 100, to achieve adaption for the battery cell 210. The protection board assembly 220 can protect the battery cell 210, for example, when an external power supply charges the battery 200 and the interior of battery 200 reaches a protection state, the internal circuit of the protection board assembly 220 will be automatically cut off to avoid overcharging; for example, when the battery 200 is over-discharged, the discharge circuit of the protection board assembly 220 will be automatically cut off to ensure that the battery 200 is not completely discharged; definitely, the stability of the current inside the battery 200 can also be ensured to avoid overheating of the battery 200 during discharge; in addition, the protection board assembly 220 can isolate multiple batteries 200 to avoid short circuit.

Specifically, referring to FIG. 4 to FIG. 17, the battery 200 may also include a connecting member 230, the connecting member 230 includes connecting tabs 231 and a connecting portion 232, the number of the connecting tabs 231 is two. The connecting portion 232 is connected to the two connecting tabs 231, one of the connecting tabs 231 is connected to and is electrically conducted with one of the tabs 212, to form a composite tab 240. That is, the composite tab 240 is electrically conducted with the battery cell body 211. The composite tab 240 and the other one of the tabs 212 are both connected to the protection board assembly 220 to form a first loop. The other one of the connecting tabs 231 and the other one of the tabs 212 are both connected to the protection board assembly 220 to form a second loop, and the first loop and the second loop can form two parallel current loops, that is, the protection board assembly 220 and the battery cell 210 have two parallel loops formed, hence the magnitude of the current in a single loop of the protection board assembly 220 can be reduced, and the size of the protection board assembly 220 can be decreased, and the accommodating size of the battery 200 can be increased, thereby increasing the capacity of the battery cell 210, that is, increasing the capacity of the battery 200.

It can be understood that the number of connecting members 230 can also be multiple. Exemplarily, when the number of connecting members 230 is two, there are two pairs of connecting tabs 231 accordingly, one of the connecting tabs 231 in each pair is connected to one of the tabs 212 to form a composite tab 240, the composite tab 240 is connected to the other one of the tabs 212 to form a current loop, and the other one of the connecting tabs 231 in each pair is respectively connected to the other one of the tabs 212 to form two parallel current loops, thereby forming three parallel current loops. In another example, when the number of connecting members 230 is three, there are three pairs of connecting tabs 231 accordingly, and one of the connecting tabs 231 in each pair is connected to one of the tabs 212 to form a composite tab 240, the composite tab 240 is connected to the other one of the tabs 212 to form a current loop, and the other one of the connecting tabs 231 in each pair is respectively connected to the other one of the tabs 212 to form three parallel current loops, thereby forming four parallel current loops. The embodiment of the present application does not limit the number of the connecting members 230, nor is it limited to the above examples.

The following description will be given by taking an example where there is one connecting member 230 in number.

As an optional implementation, referring to FIG. 3, FIG. 6, FIG. 9, FIG. 12 and FIG. 15, the connecting portion 232 includes a connecting portion body 2321 and a boss 2322.

It is understandable that the connecting portion body 2321 and the boss 2322 can be formed as an integral structure to enhance the structural stability of the connecting portion 232 and facilitate processing. Definitely, the connecting portion body 2321 and the boss 2322 can also be connected by means of welding or bonding.

Furthermore, the material for preparing the connecting portion body 2321 and the boss 2322 can be selected from metals with conductive function, and the material for preparing the tab 212 can also be selected from metals with conductive function. That is, the material for preparing the connecting member 230 can be selected from metals with conductive function, such as copper, nickel, etc. The embodiment of the present application does not limit the material for preparing the above structure, nor is it limited to the above examples.

Specifically, the connecting portion body 2321 can be connected with the two connecting tabs 231, and the two connecting tabs 231 can be respectively located on opposite sides of the connecting portion body 2321, or respectively located on adjacent sides of the connecting portion body 2321, or located on the same side of the connecting portion body 2321. The embodiment of the present application does not limit the positional relationship between the connecting tabs 231 and the connecting portion body 2321, nor is it limited to the above examples.

The following description is given by taking an example where the two connecting tabs 231 are located on the same side of the connecting portion body 2321.

Specifically, the boss 2322 is connected to the battery cell body 211 to achieve electrical conduction between the connecting member 230 and the battery cell body 211. It can be understood that the boss 2322 can be bent, and the battery cell body 211 has a groove (not shown in the figures) corresponding to the boss 2322. The boss 2322 is located in the groove and is in contact with an inner wall and/or a bottom wall of the groove to achieve connection between the boss 2322 and the battery cell body 211, thereby achieving the electrical conduction between the connecting member 230 and the battery cell body 211.

As an optional implementation, referring to FIG. 3 to FIG. 8, the boss 2322 is located at a position on the connecting portion body 2321 corresponding to any one of the two connecting tabs 231, and is located on a side of the connecting portion body 2321 close to the battery cell body 211. Specifically, the two connecting tabs 231 can be located on a side of the connecting portion body 2321 away from the battery cell body 211, and the boss 2322 is located on a side of the connecting portion body 2321 close to the battery cell body 211. That is, the boss 2322 and the two connecting tabs 231 are respectively located on opposite sides of the connecting portion body 2321, and the boss 2322 corresponds to any one of the connecting tabs 231. That is, the extending direction of the boss 2322 and the extending direction of the corresponding connecting tab 231 can be in the same straight line, and intersects with the extending direction of the connecting portion body 2321. At this time, the connecting tab 231 corresponding to the boss 2322 can be connected to and is electrically conducted with one of the tabs 212 to form a composite tab 240. The composite tab 240 is connected to the battery cell body 211 through the boss 2322 nearby, and is connected to the other one of the tabs 212 and the protection board assembly 220 to form a first loop, and the current flow efficiency is relatively high; the connecting tab 231 that does not correspond to the boss 2322 is connected to the other one of the tabs 212 and the protection board assembly 220 to form a second loop. The first loop and the second loop can form two parallel current loops, that is, the protection board assembly 220 and the battery cell 210 have two parallel loops formed, hence the magnitude of the current in a single loop of the protection board assembly 220 can be reduced, and the size of the protection board assembly 220 can be decreased, and the accommodating size of the battery 200 can be increased, thereby increasing the capacity of the battery cell 210, that is, increasing the capacity of the battery 200.

As an optional implementation, referring to FIG. 9 to FIG. 17, the boss 2322 is located on the connecting portion body 2321 between the two connecting tabs 231. Specifically, the boss 2322 is located on the corresponding connecting portion body 2321 between the two tabs 212, that is, the boss 2322 does not correspond to any connecting tab 231. At this time, any one of the connecting tabs 231 can be connected to and electrically conducted with one of the tabs 212 to form a composite tab 240. The composite tab 240 is connected to the battery cell body 211 through the boss 2322 located at the connecting portion body 2321, and connected to the other one of the tabs 212 and the protection board assembly 220 to form a first loop, and the other one of the connecting tabs 231 is connected to the other one of the tabs 212 and the protection board assembly 220 to form a second loop. The first loop and the second loop can form two parallel current loops, that is, the protection board assembly 220 and the battery cell 210 have two parallel loops formed, hence the magnitude of the current in a single loop of the protection board assembly 220 can be reduced, and the size of the protection board assembly 220 can be decreased, and the accommodating size of the battery 200 can be increased, thereby increasing the capacity of the battery cell 210, that is, increasing the capacity of the battery 200.

Further, referring to FIG. 9 to FIG. 11, the boss 2322 is located on the side of the connecting portion body 2321 close to the battery cell body 211, that is, the two connecting tabs 231 can be located on the side of the connecting portion body 2321 away from the battery cell body 211, and the boss 2322 is located on the side of the connecting portion body 2321 close to the battery cell body 211, that is, the boss 2322 and the two connecting tabs 231 are respectively located on the opposite sides of the connecting portion body 2321. At this time, the boss 2322 is close to the battery cell body 211, and correspondingly, the depth of the groove of the battery cell body 211 corresponding to the boss 2322 is larger, the length required for the boss 2322 to bend into the groove is larger, and the contact area between the boss 2322 and the groove is larger, that is, the connection between the boss 2322 and the battery cell body 211 is more stable, which is convenient for current conduction.

On the other hand, referring to FIG. 12 to FIG. 17, the boss 2322 is located on the side of the connecting portion body 2321 away from the battery cell body 211, that is, the two connecting tabs 231 can be located on the side of the connecting portion body 2321 away from the battery cell body 211, and the boss 2322 is located on the side of the connecting portion body 2321 away from the battery cell body 211, that is, the boss 2322 and the two connecting tabs 231 are both located on the side of the connecting portion body 2321 away from the battery cell body 211, and the boss 2322 is located between the two connecting tabs 231, and the boss 2322 is away from the battery cell body 211. Correspondingly, the depth of the groove of the battery cell body 211 corresponding to the boss 2322 is smaller, and the length required for the boss 2322 to bend into the groove is smaller, which facilitates the connection between the boss 2322 and the battery cell body 211, that is, the connection between the connecting member 230 and the battery cell body 211.

As an optional implementation, one of the connecting tabs 231 is stacked and connected with one of the tabs 212 to form a composite tab 240, which can reduce the space occupied by the connecting tab 231 and increase the contact area between the connecting tab 231 and the tab 212, thereby improving the structural stability of the composite tab 240.

As an optional implementation, referring to FIG. 3 to FIG. 17, the protection board assembly 220 includes a circuit board 221, a first conductive member 222, a second conductive member 223 and a third conductive member 224, the first conductive member 222 is connected to the composite tab 240, the second conductive member 223 is connected to the other one of the tabs 212, and the third conductive member 224 is connected to the other one of the connecting tabs 231. The circuit board 221, the first conductive member 222, the second conductive member 223, the composite tab 240 and the other one of the tabs 212 form a first loop. The circuit board 221, the second conductive member 223, the third conductive member 224, the other one of the tabs 212 and the other one of the connecting tabs 231 form a second loop. The first loop and the second loop can form two parallel current loops, that is, the protection board assembly 220 and the battery cell 210 have two parallel loops formed, hence the magnitude of the current in a single loop of the protection board assembly 220 can be reduced, the size of the protection board assembly 220 can be decreased, and the accommodating size of the battery 200 can be increased, thereby increasing the capacity of the battery cell 210, that is, increasing the capacity of the battery 200.

It is understandable that the first conductive member 222, the second conductive member 223 and the third conductive member 224 are all electrically connected to the circuit board 221. Exemplarily, the first conductive member 222, the second conductive member 223 and the third conductive member 224 are all fixed to the circuit board 221 by welding, to achieve the conduction of the circuit.

It should be noted that the materials used for preparing the first conductive member 222, the second conductive member 223 and the third conductive member 224 may be the same or different, but they are all conductive materials, such as copper, nickel and other metals. The embodiments of the present application do not limit the materials used for preparing the first conductive member 222, the second conductive member 223 and the third conductive member 224, nor are they limited to the above examples.

Furthermore, the circuit board 221 may have a first external connecting member 225 and a second external connecting member 226 connected to the first loop and the second loop respectively, to electrically conduct the current in the battery cell body 211 to other electronic elements 120 through the first external connecting member 225 and the second external connecting member 226.

As an optional implementation, referring to FIG. 3, FIG. 6, FIG. 9, FIG. 12 and FIG. 15, the battery 200 also includes an insulating layer 250. The insulating layer 250 covers both sides of the connecting portion 232. Along the extending direction of the connecting portion 232, the edge of the insulating layer 250 protrudes beyond the edge of the connecting portion 232.

It is understandable that the insulating layer 250 may only cover the surfaces on the two opposite sides of the connecting portion body 2321 to prevent the connecting portion body 2321 from being directly connected to the tabs 212 or the battery cell body 211 or other electronic elements 120 to cause a short circuit.

As an optional implementation, the edge of the insulating layer 250 protrudes beyond the edge of the connecting portion 232 by a size of 0.2 mm to 1.0 mm.

It is understandable that along the extending direction of the connecting portion body 2321, the edge of the insulating layer 250 protrudes beyond the edge of the connecting portion body 2321 to reduce the possibility of short circuit caused by direct connection between the connecting portion body 2321 and the tabs 212 or the battery cell body 211 or other electronic elements 120. Preferably, the edge of the insulating layer 250 protrudes beyond the edge of the connecting portion body 2321 by a size ranging from 0.2 mm to 1.0 mm.

As an optional implementation, referring to FIG. 3, FIG. 6, FIG. 9, FIG. 12 and FIG. 15, the extending direction of the connecting tab 231 and the extending direction of the connecting portion body 2321 intersect with each other, and a first notch 233 is provided at the corner of the connection position between the connecting tab 231 and the connecting portion body 2321, and/or, referring to FIG. 3 and FIG. 12, at least one tab 212 is located between two connecting tabs 231, and the orthographic projection of the tab 212 on the plane where the connecting portion body 2321 is located overlaps with at least part of the connecting portion body 2321, and a second notch 234 is provided on the connecting portion body 2321 located in an overlapping area, and/or a third notch 235 is provided at at least one corner of the connection position between the boss 2322 and the connecting portion body 2321. That is, the connecting member 230 may have only the first notch 233 to prevent the connecting member 230 from tearing, or may have only the second notch 234 to provide bending space for the tab 212, or may have only the third notch 235 to facilitate the bending of the boss 2322, or may have both the first notch 233 and the second notch 234, or may have both the first notch 233 and the third notch 235, or may have all of the first notch 233, the second notch 234 and the third notch 235.

Specifically, the first notch 233 is located at the corner of the connection position between the connecting tab 231 and the connecting portion body 2321, that is, the number of first notches 233 is the same as the number of connecting tabs 231. Exemplarily, when the number of the connecting tabs 231 is two, there are two first notches 233; further, the first notch 233 can also be provided at the corner of the connection position between the boss 2322 and the connecting portion body 2321. That is, when a connecting member 230 has two connecting tabs 231, the corners of the connection positions between the two connecting tabs 231 and the connecting portion body 2321, and the corner of the connection position between the boss 2322 and the connecting portion body 2321 are all provided with a first notch 233 to prevent the connecting member 230 from tearing.

It is understandable that the shape of the first notch 233 can be square, circular, semicircular, etc. The embodiment of the present application does not limit the shape of the first notch 233 and nor is it limited to the above examples. The shapes of the second notch 234 and the third notch 235 may be the same as or different from the first notch 233, which will not be described in detail below.

Specifically, when the tab 212 is located between two connecting tabs 231, the orthographic projection of the tab 212 on the plane where the connecting portion 232 is located overlaps with at least part of the connecting portion 232, that is, a second notch 234 can be provided at a position of the connecting portion 232 corresponding to the tab 212. Furthermore, the second notch 234 can be provided at a position of the connecting portion body 2321 corresponding to the tab 212. When the tabs 212 are bent, at the position of the connecting portion 232 located between the bent tabs 212, the bent tabs 212 are easily in contact with the connecting portion 232. The second notch 234 can be provided at a position of the connecting portion 232 corresponding to the tab 212 to avoid contact between the bent tabs 212 and the connecting portion 232, thereby providing a bending space for the tab 212.

It should be noted that, referring to FIG. 3 to FIG. 5 and FIG. 12 to FIG. 14, the connecting member 230 can be located on the side where the bending direction of the tab 212 is located, or on the side away from the bending direction of the tab 212, that is, when the connecting member 230 is located on the side where the bending direction of the tab 212 is located, the connecting member 230 is located between the bent tabs 212. At this time, the connecting member 230 can be provided with a second notch 234 for the tab 212 to bend.

Specifically, in order to facilitate the bending of the boss 2322, a third notch 235 is provided at the corner of the connection position between the boss 2322 and the connecting portion body 2321. When the boss 2322 is connected to the edge of the connecting portion body 2321, there is one third notch 235 in number; when the boss 2322 is connected to the middle position of the connecting portion body 2321, there are two third notches 235 in number, and the two third notches 235 are respectively located on either sides of the boss 2322.

On the other hand, referring to FIG. 6 to FIG. 11 and FIG. 15 to FIG. 17, when the connecting member 230 is located on the side away from the bending direction of the tab 212, that is, the connecting member 230 is not located between the bent tabs 212, at this time, the required length of the tab 212 is smaller, and the distance between the connecting member 230 and the battery cell body 211 is smaller, which can further increase the accommodating space of the battery cell body 211, thereby increasing the capacity of the battery cell body 211.

It is understandable that the insulating layer 250 may cover the connecting portion body 2321 and the first notch 233 and/or the second notch 234 and/or the third notch 235.

As an optional implementation, the connecting member 230 is a flexible connecting member, and a portion of the connecting member 230 is bent and connected to the battery cell body 211.

It can be understood that the connecting member 230 is made of a flexible material to facilitate bending. The bent portion may be a boss 2322, and the boss 2322 is bent and connected to the battery cell body 211 to fix the connecting member 230.

As an optional implementation, a portion of the connecting member 230 is bent and enters a deep pit surface (not shown in the figure) of a top sealing of the battery cell body 211; or, a portion of the connecting member 230 is bent and enters a shallow pit surface of a top sealing of the battery cell body 211.

Specifically, during the manufacturing process of the battery 200, a packaging process is usually required, and a deep pit surface and a shallow pit surface are formed on a top sealing of the battery cell body 211.

It is understandable that a portion of the connecting member 230 is the boss 2322, that is, the boss 2322 can be bent into the deep pit surface of the top sealing, or into the shallow pit surface of the top sealing, for connection to the battery cell body 211, thereby fixing the connecting member 230 and improving the connection stability between the connecting member 230 and the battery cell 210.

As an optional implementation, the connecting member 230 is fixedly connected to the top sealing of the battery cell body 211 by means of double-sided tape or adhesive tape or glue. That is, the boss 2322 is fixedly connected to the top sealing of the battery cell body 211 by double-sided tape, or by adhesive tape, or by glue, for connection to the battery cell body 211, thereby fixing the connecting member 230 and improving the connection stability between the connecting member 230 and the battery cell 210.

As an optional implementation, the connecting portion 232 is bonded to the battery cell 210 by a fixing glue. Specifically, the fixing glue can be located on a surface on the side of the connecting portion body 2321 close to the battery cell 210 and located at the end of the battery cell body 211 close to the side where the tab 212 is located, to fix the connecting member 230. It can be understood that the fixing glue is one of double-sided tape, adhesive tape and glue.

It should be noted that the fixing glue can be an insulating glue, that is, while fixing the connecting member 230, it prevents the connecting portion body 2321 from being directly connected to the tab 212 or the battery cell body 211 or other electronic elements 120 to cause a short circuit.

Finally, it should be noted that the above embodiments are only used to illustrate the technical solutions of the present application, rather than to limit the present application. Although the present application has been described in detail with reference to the aforementioned embodiments, those skilled in the art should understand that they can still modify the technical solutions described in the aforementioned embodiments, or replace some or all of the technical features therein within the scope of the appended claims.

## Claims

1. A battery (200), comprising a battery cell (210), a connecting member and a protection board assembly, **characterized in that**:
the battery cell (210) comprises a battery cell body (211) and two tabs (212) connected to the battery cell body (211), the connecting member comprises two connecting tabs (231) and a connecting portion (232) connecting the two connecting tabs (231),
wherein one of the connecting tabs (231) is connected to and is electrically conducted with one of the tabs (212) to form a composite tab (240); the composite tab (240) and the other one of the tabs (212) are both connected to the protection board assembly to form a first loop; the other one of the connecting tabs (231) and the other one of the tabs (212) are both connected to the protection board assembly to form a second loop; and
the connecting portion (232) comprises a connecting portion body (2321) and a boss (2322) which are integrally formed, the connecting portion body (2321) is connected to the two connecting tabs (231), and the boss (2322) is connected to the battery cell body (211).

2. The battery (200) according to claim 1, wherein the boss (2322) is located at a position on the connecting portion body (2321) corresponding to any one of the two connecting tabs (231), and is located on a side of the connecting portion body (2321) close to the battery cell body (211).

3. The battery (200) according to claim 1, wherein the boss (2322) is located on the connecting portion body (2321) between the two connecting tabs (231);
the boss (2322) is located on a side of the connecting portion body (2321) close to the battery cell body (211);
or, the boss (2322) is located on a side of the connecting portion body (2321) away from the battery cell body (211).

4. The battery (200) according to any one of claims 1 to 3, wherein the one of the connecting tabs (231) is stacked and connected with the one of the tabs (212) to form the composite tab (240).

5. The battery (200) according to any one of claims 1 to 3, wherein the protection board assembly comprises a circuit board (221), a first conductive member (222), a second conductive member (223) and a third conductive member (224), the first conductive member (222) is connected to the composite tab (240), the second conductive member (223) is connected to the other one of the tabs (212), and the third conductive member (224) is connected to the other one of the connecting tabs (231);
the circuit board (221), the first conductive member (222), the second conductive member (223), the composite tab (240) and the other one of the tabs (212) form the first loop;
the circuit board (221), the second conductive member (223), the third conductive member (224), the other one of the tabs (212), and the other one of the connecting tabs (231) form the second loop.

6. The battery (200) according to any one of claims 1 to 3, further comprising an insulating layer (250), wherein the insulating layer (250) covers both sides of the connecting portion, and along an extending direction of the connecting portion, an edge of the insulating layer (250) protrudes beyond an edge of the connecting portion.

7. The battery (200) according to claim 6, wherein the edge of the insulating layer (250) protrudes beyond the edge of the connecting portion by a size of 0.2 mm to 1.0 mm.

8. The battery (200) according to claim 1, wherein an extending direction of the connecting tab (231) and an extending direction of the connecting portion body (2321) intersect with each other, and a first notch (233) is provided at a corner of a connection position between the connecting tab (231) and the connecting portion body (2321);
and/or, at least one tab (212) is located between the two connecting tabs (231), an orthographic projection of the at least one tab on a plane in which the connecting portion body (2321) is located overlaps with at least part of the connecting portion body (2321) to form an overlapping area, and a second notch (234) is provided on the connecting portion body (2321) in the overlapping area;
and/or, a third notch (235) is provided at at least one corner of a connection position between the boss (2322) and the connecting portion body (2321).

9. The battery (200) according to any one of claims 1 to 3, wherein the connecting member is a flexible connecting member, and a portion of the connecting member is bent and connected to the battery cell body (211).

10. The battery (200) according to claim 9, wherein the portion of the connecting member is bent and enters a deep pit surface of a top sealing of the battery cell body (211);
or, the portion of the connecting member is bent and enters into a shallow pit surface of a top sealing of the battery cell body (211).

11. The battery (200) according to any one of claims 1 to 3, wherein the connecting member is fixedly connected to a top sealing of the battery cell body (211) by double-sided tape or adhesive tape or glue.

12. An electronic device (100), comprising a housing (110) and the battery (200) according to any one of claims 1 to 11, wherein the battery is located in the housing (100).

## Patentansprüche

1. Batterie (200), umfassend eine Batteriezelle (210), ein Verbindungselement und eine Schutzplattenbaugruppe, **dadurch gekennzeichnet, dass**:
die Batteriezelle (210) einen Batteriezellenkörper (211) und zwei Laschen (212) umfasst, die mit dem Batteriezellenkörper (211) verbunden sind, das Verbindungselement zwei Verbindungslaschen (231) und einen Verbindungsabschnitt (232) umfasst, der die zwei Verbindungslaschen (231) verbindet,
wobei eine der Verbindungslaschen (231) mit einer der Laschen (212) verbunden und elektrisch leitend ist, um eine Verbundlasche (240) zu bilden; die Verbundlasche (240) und die andere der Laschen (212) beide mit der Schutzplattenbaugruppe verbunden sind, um eine erste Schleife zu bilden; die andere der Verbindungslaschen (231) und die andere der Laschen (212) beide mit der Schutzplattenbaugruppe verbunden sind, um eine zweite Schleife zu bilden; und
der Verbindungsabschnitt (232) einen Verbindungsabschnittskörper (2321) und einen Vorsprung (2322) umfasst, die einstückig ausgebildet sind, der Verbindungsabschnittskörper (2321) mit den zwei Verbindungslaschen (231) verbunden ist und der Vorsprung (2322) mit dem Batteriezellenkörper (211) verbunden ist.

2. Batterie (200) nach Anspruch 1, wobei sich der Vorsprung (2322) an einer Position auf dem Verbindungsabschnittskörper (2321) befindet, die einer der zwei Verbindungslaschen (231) entspricht, und sich auf einer Seite des Verbindungsabschnittskörpers (2321) nahe dem Batteriezellenkörper (211) befindet.

3. Batterie (200) nach Anspruch 1, wobei der Vorsprung (2322) an dem Verbindungsabschnittskörper (2321) zwischen den zwei Verbindungslaschen (231) angeordnet ist;
der Vorsprung (2322) an einer Seite des Verbindungsabschnittskörpers (2321) nahe dem Batteriezellenkörper (211) angeordnet ist;
oder der Vorsprung (2322) auf einer Seite des Verbindungsabschnittskörpers (2321) entfernt von dem Batteriezellenkörper (211) angeordnet ist.

4. Batterie (200) nach einem der Ansprüche 1 bis 3, wobei die eine der Verbindungslaschen (231) gestapelt und mit der einen der Laschen (212) verbunden ist, um die Verbundlasche (240) zu bilden.

5. Batterie (200) nach einem der Ansprüche 1 bis 3, wobei die Schutzplattenbaugruppe eine Leiterplatte (221), ein erstes leitfähiges Element (222), ein zweites leitfähiges Element (223) und ein drittes leitfähiges Element (224) umfasst, das erste leitfähige Element (222) mit der Verbundlasche (240) verbunden ist, das zweite leitfähige Element (223) mit der anderen der Laschen (212) verbunden ist und das dritte leitfähige Element (224) mit der anderen der Verbindungslaschen (231) verbunden ist;
die Leiterplatte (221), das erste leitfähige Element (222), das zweite leitfähige Element (223), die Verbundlasche (240) und die andere der Laschen (212) bilden die erste Schleife;
die Leiterplatte (221), das zweite leitfähige Element (223), das dritte leitfähige Element (224), die andere der Laschen (212) und die andere der Verbindungslaschen (231) bilden die zweite Schleife.

6. Batterie (200) nach einem der Ansprüche 1 bis 3, ferner umfassend eine Isolierschicht (250), wobei die Isolierschicht (250) beide Seiten des Verbindungsabschnitts bedeckt und entlang einer Erstreckungsrichtung des Verbindungsabschnitts ein Rand der Isolierschicht (250) über einen Rand des Verbindungsabschnitts hinausragt.

7. Batterie (200) nach Anspruch 6, wobei der Rand der Isolierschicht (250) um eine Größe von 0,2 mm bis 1,0 mm über den Rand des Verbindungsabschnitts hinausragt.

8. Batterie (200) nach Anspruch 1, wobei eine Erstreckungsrichtung der Verbindungslasche (231) und eine Erstreckungsrichtung des Verbindungsabschnittskörpers (2321) einander schneiden und eine erste Aussparung (233) an einer Ecke einer Verbindungsposition zwischen der Verbindungslasche (231) und dem Verbindungsabschnittskörper (2321) bereitgestellt ist;
und/oder sich mindestens eine Lasche (212) zwischen den beiden Verbindungslaschen (231) befindet, eine orthografische Projektion der mindestens einen Lasche auf eine Ebene, in der sich der Verbindungsabschnittskörper (2321) befindet, mit mindestens einem Teil des Verbindungsabschnittskörpers (2321) überlappt, um einen Überlappungsbereich zu bilden, und eine zweite Aussparung (234) an dem Verbindungsabschnittskörper (2321) in dem Überlappungsbereich bereitgestellt ist;
und/oder eine dritte Aussparung (235) an mindestens einer Ecke einer Verbindungsposition zwischen dem Vorsprung (2322) und dem Verbindungsabschnittskörper (2321) bereitgestellt ist.

9. Batterie (200) nach einem der Ansprüche 1 bis 3, wobei das Verbindungselement ein flexibles Verbindungselement ist und ein Abschnitt des Verbindungselements gebogen und mit dem Batteriezellenkörper (211) verbunden ist.

10. Batterie (200) nach Anspruch 9, wobei der Abschnitt des Verbindungselements gebogen ist und in eine tiefe Grubenfläche einer oberen Abdichtung des Batteriezellenkörpers (211) eintritt;
oder der Abschnitt des Verbindungselements gebogen ist und in eine flache Grubenfläche einer oberen Dichtung des Batteriezellenkörpers (211) eintritt.

11. Batterie (200) nach einem der Ansprüche 1 bis 3, wobei das Verbindungselement durch doppelseitiges Band oder Klebeband oder Kleber fest mit einer oberen Abdichtung des Batteriezellenkörpers (211) verbunden ist.

12. Elektronische Vorrichtung (100), umfassend ein Gehäuse (110) und die Batterie (200) nach einem der Ansprüche 1 bis 11, wobei die Batterie in dem Gehäuse (100) angeordnet ist.

## Revendications

1. Une batterie (200), comprenant une cellule de batterie (210), un élément de connexion et un ensemble de carte de protection, **caractérisée en ce que** :
la cellule de batterie (210) comprend un corps de cellule de batterie (211) et deux languettes (212) connectées au corps de cellule de batterie (211), l'élément de connexion comprend deux languettes de connexion (231) et une partie de connexion (232) connectant les deux languettes de connexion (231),
dans laquelle l'une des languettes de connexion (231) est connectée à et est conduite par voie électrique avec l'une des languettes (212) pour former une languette composite (240) ; la languette composite (240) et l'autre des languettes (212) sont toutes deux connectées à l'ensemble de carte de protection pour former une première boucle ; l'autre des languettes de connexion (231) et l'autre des languettes (212) sont toutes deux connectées à l'ensemble de carte de protection pour former une deuxième boucle ; et
la partie de connexion (232) comprend un corps de partie de connexion (2321) et un bossage (2322) qui sont formés d'un seul tenant, le corps de partie de connexion (2321) est connecté aux deux languettes de connexion (231), et le bossage (2322) est connecté au corps de cellule de batterie (211).

2. La batterie (200) selon la revendication 1, dans laquelle le bossage (2322) est situé à une position sur le corps de partie de connexion (2321) correspondant à l'une quelconque des deux languettes de connexion (231), et est situé sur un côté du corps de partie de connexion (2321) à proximité du corps de cellule de batterie (211).

3. La batterie (200) selon la revendication 1, dans laquelle le bossage (2322) est situé sur le corps de partie de connexion (2321) entre les deux languettes de connexion (231) ;
le bossage (2322) est situé sur un côté du corps de partie de connexion (2321) à proximité du corps de cellule de batterie (211) ;
ou le bossage (2322) est situé sur un côté du corps de partie de connexion (2321) éloigné du corps de cellule de batterie (211).

4. La batterie (200) selon l'une quelconque des revendications 1 à 3, dans laquelle l'une des languettes de connexion (231) est empilée et connectée à l'une des languettes (212) pour former la languette composite (240).

5. La batterie (200) selon l'une quelconque des revendications 1 à 3, dans laquelle l'ensemble de carte de protection comprend une carte de circuit imprimé (221), un premier élément conducteur (222), un deuxième élément conducteur (223) et un troisième élément conducteur (224), le premier élément conducteur (222) est connecté à la languette composite (240), le deuxième élément conducteur (223) est connecté à l'autre des languettes (212), et le troisième élément conducteur (224) est connecté à l'autre des languettes de connexion (231) ;
la carte de circuit imprimé (221), le premier élément conducteur (222), le deuxième élément conducteur (223), la languette composite (240) et l'autre des languettes (212) forment la première boucle ;
la carte de circuit imprimé (221), le deuxième élément conducteur (223), le troisième élément conducteur (224), l'autre des languettes (212) et l'autre des languettes de connexion (231) forment la deuxième boucle.

6. La batterie (200) selon l'une quelconque des revendications 1 à 3, comprenant en outre une couche isolante (250), dans laquelle la couche isolante (250) recouvre les deux côtés de la partie de connexion, et le long d'une direction d'extension de la partie de connexion, un bord de la couche isolante (250) fait saillie au-delà d'un bord de la partie de connexion.

7. La batterie (200) selon la revendication 6, dans laquelle le bord de la couche isolante (250) fait saillie au-delà du bord de la partie de connexion d'une taille de 0,2 mm à 1,0 mm.

8. La batterie (200) selon la revendication 1, dans laquelle une direction d'extension de la languette de connexion (231) et une direction d'extension du corps de partie de connexion (2321) se croisent l'une avec l'autre, et une première encoche (233) est prévue au niveau d'un coin d'une position de connexion entre la languette de connexion (231) et le corps de partie de connexion (2321) ;
et/ou au moins une languette (212) est située entre les deux languettes de connexion (231), une projection orthographique de l'au moins une languette sur un plan dans lequel le corps de partie de connexion (2321) est situé chevauche au moins une partie du corps de partie de connexion (2321) pour former une zone de chevauchement, et une deuxième encoche (234) est prévue sur le corps de partie de connexion (2321) dans la zone de chevauchement ;
et/ou une troisième encoche (235) est prévue au niveau au moins d'un coin d'une position de connexion entre le bossage (2322) et le corps de partie de connexion (2321).

9. La batterie (200) selon l'une quelconque des revendications 1 à 3, dans laquelle l'élément de connexion est un élément de connexion flexible, et une partie de l'élément de connexion est pliée et connectée au corps de cellule de batterie (211).

10. La batterie (200) selon la revendication 9, dans laquelle la partie de l'élément de connexion est pliée et pénètre dans une surface de fosse profonde d'un joint supérieur du corps de cellule de batterie (211) ;
ou la partie de l'élément de connexion est pliée et pénètre dans une surface de fosse peu profonde d'un joint supérieur du corps de cellule de batterie (211).

11. La batterie (200) selon l'une quelconque des revendications 1 à 3, dans laquelle l'élément de connexion est connecté de manière fixe à un joint supérieur du corps de cellule de batterie (211) par un ruban double face ou un ruban adhésif ou de la colle.

12. Un dispositif électronique (100), comprenant un boîtier (110) et la batterie (200) selon l'une quelconque des revendications 1 à 11, la batterie étant située dans le boîtier (100).
